# EUROPÄISCHE PATENTSCHRIFT

(11) **EP 0 768 471 B1**
(45) Veröffentlichungstag und Bekanntmachung des Hinweises auf die Patenterteilung: **23.01.2002**
(21) Anmeldenummer: 96110954.3
(22) Anmeldetag: 06.07.1996
(51) Int. Cl.: F16C 1/22, B60T 7/10

(54) **Vorrichtung zur selbsttätigen Längeneinstellung bzw. -nachstellung von mechanisch-flexiblen Betätigungszügen**
Device for length self-adjustment of flexible mechanical controls
Dispositif de réglage automatique de la longueur de commandes mécaniques flexibles

(30) Priorität: 11.10.1995 DE 19537865
(43) Veröffentlichungstag der Anmeldung: 16.04.1997
(73) Patentinhaber: KÜSTER & Co. GmbH, 35630 Ehringshausen (DE)
(72) Erfinder: Krug, Michael, 35614 Asslar (DE)
(74) Vertreter: Müller, Eckhard, Dr.

(56) Entgegenhaltungen:
- EP-A- 0 250 185
- EP-A- 0 317 117
- EP-A- 0 389 273
- US-A- 4 438 658

## Beschreibung

Die Erfindung bezieht sich auf eine Vorrichtung mit einem Geber und einem Nehmer, die mittels eines mechanisch-flexiblen Betätigungszuges gekoppelt sind, wobei der Geber einen um eine Achse schwenkbaren Betätigungshebel mit einem, eine Außenzahnung aufweisenden Kreissegment aufweist, der Außenzahnung des Kreissegmentes eine längsverschiebbar in einer Führung geführte Zahnstange mit einer Gegenzahnung zugeordnet ist, wobei an der Zahnstange das geberseitige Ende eines Innenzuges des Betätigungszuges angelenkt und zur selbsttätigen Längeneinstellung bzw. -nachstellung des Betätigungszuges zwischen einem Stützlager für das geberseitige Ende des Außenschlauches des Betätigungszuges und der Zahnstange ein Druckfederelement angeordnet ist und wobei die Außenzahnung des Betätigungshebels in einer Ruheposition des Betätigungshebels außer Eingriff und in einer Betätigungsposition in Eingriff mit der Gegenzahnung der Zahnstange steht.

Nachstelleinrichtungen für Betätigungszüge dienen dazu, die vorhandene Lose, bspw. bedingt durch eine Längung des Innenzuges oder durch ein sich Setzen der Außenhülle der Betätigung, herauszunehmen. Lose im Gesamtsystem kann sich auch dadurch ergeben, daß bspw. an der Geber- oder Nehmerseite des Betätigungszuges, etwa bei einem Verschleiß der Bremse, ebenfalls eine Lose auftreten kann. Auch ist zu berücksichtigen, daß zum Einbau des Betätigungszuges eine Lose vorhanden sein muß, um den Betätigungszug überhaupt einbauen zu können. Die bekannten Einstellvorrichtung basieren entweder darauf, daß bspw. eine Verlängerung des Außenschlauches des Betätigungszuges vorgenommen wird, oder der Innenzug entweder tatsächlich oder virtuell verkürzt wird. Die bekannten Einstellvorrichtungen sind in ihrem Aufbau und auch in ihrer Herstellung recht aufwendig.

Aus der EP 0 389 273 A1 ist bereits eine Vorrichtung mit den eingangs genannten Merkmalen bekannt. Bei dieser Vorrichtung wird der Betätigungshebel auf einen weiteren Hebel, der endseitig eine Verzahnung aufweist, die mit der Verzahnung der Zahnstange in der Betätigungsposition kämmt. Die Schwenkachse dieses mit der Verzahnung versehenen Hebels ist entlang eines Kreisbogens verschwenkbar. Insoweit ist die bekannte Vorrichtung recht kompliziert aufgebaut.

Demgegenüber liegt der Erfindung die Aufgabe zugrunde, eine konstruktiv vereinfachte Vorrichtung, mit der die Außenzahnung und Gegenzahnung miteinander außer Eingriff bzw. in Eingriff bringbar sind, bereitzustellen.

Diese Aufgabe wird nach der Erfindung bei der Vorrichtung mit den eingangs genannten Merkmalen dadurch gelöst, daß die Achse ortsfest angeordnet ist und das Kreissegment einen unverzahnten Abschnitt, insbesondere einen Freilauf aufweist, so daß der Betätigungshebel in der Ruheposition außer Eingriff mit der Gegenzahnung steht. Durch diese Maßnahmen wird eine konstruktiv einfache und wirkungsvolle Nachstellvorrichtung geschaffen. Befindet sich die Außenzahnung des Betätigungshebels außer Eingriff mit der Gegenzahnung der Zahnstange, ist eine permanente Ein- oder Nachstellung des Betätigungszuges bei einer eventuell auftretenden oder vorhandenen Lose gegeben, indem das sich an dem ortsfesten Stützlage abstützende Druckfederelement auf die Zahnstange wirkt und eine Spannung auf den Innenzug ausübt. In dem Gesamtsystem vorhandene Lose werden somit herausgenommen. Wenn nun der Betätigungshebel betätigt wird, um auf den Nehmer eine Stellbewegung zu übertragen, gelangt die Außenzahnung in Eingriff mit der Gegenzahnung der Zahnstange, wodurch eine Zugbewegung auf den Innenzug des Betätigungszuges ausgeübt und ein entsprechender Betätigungsweg an der Nehmerseite zur Verstellung eines auf der Nehmerseite angeordneten Aggregates bzw. Nehmers vorgenommen wird. Dabei weist das Kreissegment einen unverzahnten Abschnitt, insbesondere einen Freilauf auf, so daß der Betätigungshebel in der Ruheposition außer Eingriff mit der Gegenzahnung steht. Durch einfaches Weglassen einiger Zähne der Außenverzahnung des Kreissegmentes in einem Teilabschnitt kann dieser Freilauf auf konstruktiv äußerst einfache und unaufwendige Weise realisiert werden.

Nach einer vorteilhaften Ausführungsform der Erfindung ist die Ruheposition durch einen Anschlag definiert.

Von besonderem Vorteil ist der Betätigungshebel in einem Anlieferungs- bzw. Vormontagezustand der Vorrichtung mittels einer Rastung, eines entfernbare Sperrstücks o. dgl. in einer solchen Betätigungsposition gehalten, in der das Druckfederelement i. w. auf ein Kleinstmaß oder jedenfalls auf ein gegenüber der Normallänge reduziertes Maß zusammengedrückt ist. Durch diese Maßnahme wird insbesondere der Einbau der Vorrichtung in einem Kraftfahrzeug o. dgl. erleichtert, da die Vorrichtung in dem Anlieferungs- bzw. Vormontageszustand sich in einer solchen Position befindet, in der genügend Lose, d.h. eine ausreichende überstehende Länge des Innenzuges gegenüber dem Außenschlauch, vorhanden ist, so daß ein Einhängen des Innenzuges den Nehmer ohne weiteres möglich ist.

Nach einer anderer besonders bevorzugten Ausführungsform der Erfindung ist der erste Zahn der Außenzahnung, der bei Betätigung des Betätigungshebels in Eingriff mit der Gegenzahnung der Zahnstange gelangt, federelastisch an dem Kreissegment gelagert. Infolge der stufenlose Ein- bzw. Nachstellung der Vorrichtung kann es vorkommen, daß korrespondierende Zähne der Außenzahnung und der Gegenzahnung beim Betätigen des Betätigungshebels nicht unmittelbar in Eingriff miteinander gelangen. Hier schafft eine federelastische Lagerung zumindest des ersten Zahnes der Außenzahnung Abhilfe, so daß in jeder Position der Außenzahnung bzgl. der Gegenzahnung eine Synchronisation gewährleistet ist.

Dabei ist von Vorteil der Zahn in einer am Kreissegment i. w. radial angeordneten Aufnahme geführt und mittels eines Federelements mit einer radial nach außen wirkenden Vorspannung beaufschlagt. Hierdurch ist sichergestellt, daß der erste Zahn bei einem Nichtkämmen mit der Gegenzahnung nicht verklemmen und elastisch in Richtung der Achse ausweichen kann.

Dabei wird gemäß einer anderen vorteilhaften Weiterbildung der Erfindung der Ausfederweg des Zahnes durch zusammenwirkende Widerlager des Zahnes und der Aufnahme begrenzt. Hierdurch ist gewährleistet, daß der Zahn sicher am Kreissegment gehalten ist.

Gemäß einer vorteilhaften Ausgestaltung der Erfindung ist der Zahn einstückig mittels eines Federsteges dem Kreissegment angeformt. Auch in diesem Fall kann der Zahn bei einem Nichtkämmen mit der Gegenzahnung elastisch i. w. in Richtung der Achse radial nach innen ausweichen.

Dabei hat es sich als vorteilhaft erwiesen, daß der Federsteg i. w. entlang des Umfanges des Kreissegments geführt ist, wobei benachbart des Federsteges eine radial innenliegende Ausnehmung in dem Kreissegment vorgesehen ist. Somit können der Federsteg sowie der Zahn bei einem Nichtkämmen mit der Gegenzahnung in diese innenliegende Ausnehmung des Kreissegmentes in Richtung der Achse ausweichen.

Die Betätigungszüge sind weiterhin bevorzugt als Bremsseilzüge von Kraftfahrzeugen ausgebildet.

Weitere Vorteile und Anwendungsmöglichkeiten der vorliegenden Erfindung ergeben sich aus der nachfolgenden Beschreibung der Ausführungsbeispiele anhand der Zeichnungen.

Es zeigen:
- Figur 1: eine schematische Darstellung eines Ausführungsbeispiels der Vorrichtung nach der Erfindung mit dem Betätigungselement in einer Ruheposition,
- Figur 2: in schematischer Darstellung die Vorrichtung in einem Anlieferungs- bzw. Vormontagezustand mit eingesetztem Sperrstück,
- Figur 3: die Vorrichtung gemäß Figur 2 mit entnommenen Sperrstück und dem Betätigungshebel in der Ruheposition,
- Figur 4: die Vorrichtung gemäß Figur 3 mit dem Betätigungshebel in der Betätigungsposition,
- Figur 5: eine erste Ausführungsform eines elastisch an dem Kreissegment gelagerten Zahnes der Außenzahnung und
- Figur 6: eine zweite Ausführungsform eines elastisch an dem Kreissegment gelagerten Zahnes der Außenzahnung.

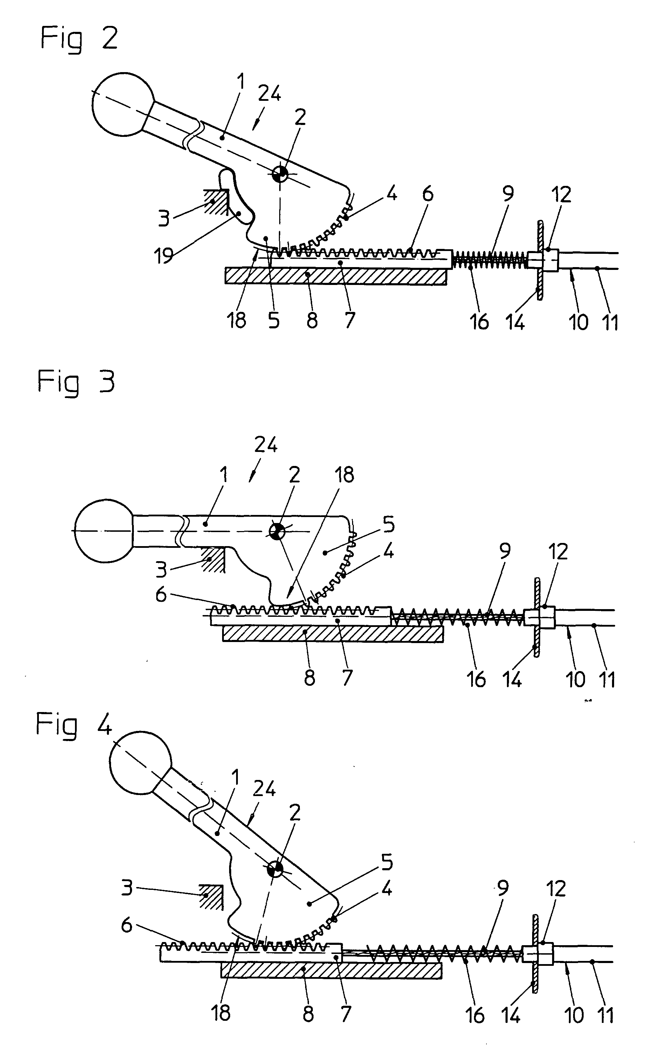

Bei den in den Figuren dargestellten Ausführungsbeispielen ist eine Nachstellung für einen einfachen Betätigungszug 10 dargestellt. Geberseitig ist ein Betätigungshebel 1 vorgesehen, welcher schwenkbar an einer ortsfesten Achse 2 gelagert ist. In seiner Ruheposition liegt der Betätigungshebel 1 gegen einem Anschlag 3 an. Der Betätigungshebel 1 weist an einem Kreissegment 5 über einen Abschnitt eine Außenzahnung 4 auf, welche dazu ausgebildet ist, im Betriebszustand gemäß Figur 4 mit einer Gegenzahnung 6 einer Zahnstange 7 zu kämmen. Die Zahnstange 7 ist in beliebiger Weise mittels einer Führung 8 in Längsrichtung verschiebbar geführt. An der Zahnstange 7 ist der Innenzug 9 des Betätigungszuges 10 angelenkt.

Der Betätigungszug 10 besteht aus einem Außenschlauch 11, in welchem der Innenzug 9 verschiebbar geführt ist. Die Enden des Außenschlauches 11 sind geber- bzw. nehmerseitig in Schlauchfassungen 12, 13 aufgenommen, wobei die beiden Schlauchfassungen 12, 13 ortsfest in Stützlagern 14, 15 gehalten sind.

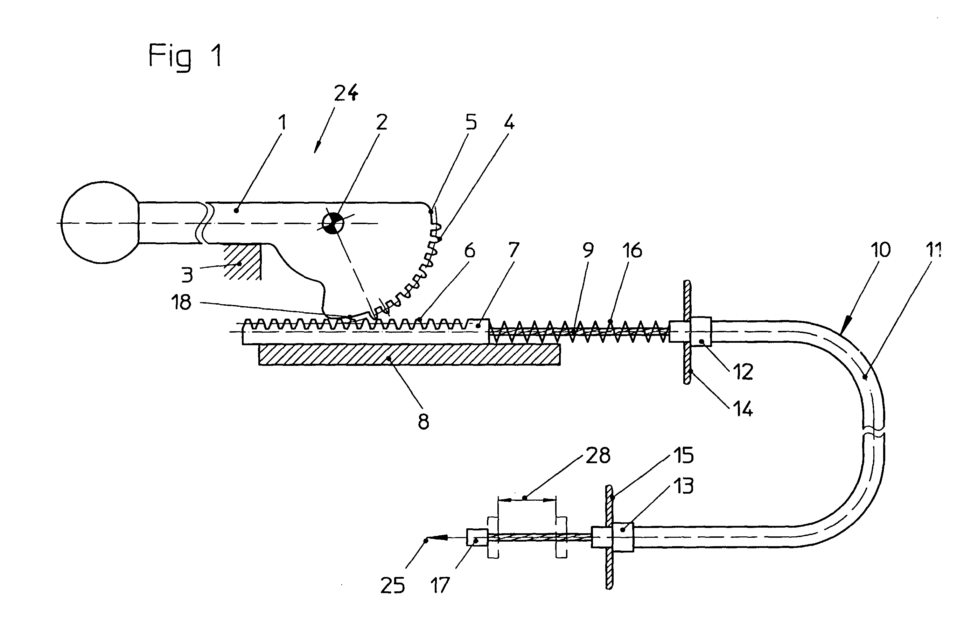

Zwischen der geberseitigen Schlauchfassung 12 und der Zahnstange 7 ist ein Druckfederelement 16 eingesetzt. Nehmerseitig weist der Innenzug 9 an seinem Ende bspw. einen Nippel 17 auf, mittels welchem der Innenzug 9 an den Nehmer 25 zur Übertragung von Stellbewegungen des Gebers 24 angeschlossen ist. Der Verstellweg bzw. der Betätigungsweg ist in Figur 1 durch einen Pfeil 28 dargestellt.

Weiterhin weist das Kreissegment 5 in Ruhestellung des Betätigungshebels 1 einen unverzahnten Abschnitt 18 bzw. ein Freilauf auf, wodurch der Betätigungshebel 1 außer Eingriff mit der Zahnstange 7 steht.

Die Wirkungsweise der Vorrichtung wird nun anhand der Figuren 2 bis 4 beschrieben.

Figur 2 zeigt den Anlieferungszustand, welcher dadurch gekennzeichnet ist, daß die Druckfeder 16 auf Kleinstmaß zusammengeschoben ist, wodurch genügend Lose, d.h. die überstehende Länge des Innenzuges 9 gegenüber dem Außenschlauch 11, zum Einhängen des Innenzuges an den Nehmer 25 oder die Nehmerseite vorhanden ist. In diesem Anlieferungszustand ist, wie insbesondere aus Figur 2 zu entnehmen, ein Sperrstück 19 vorgesehen, welches verhindert, daß der Betätigungshebel 1 unbeabsichtigt in eine Ruhestellung, gemäß Figur 1 oder Figur 3 übergeführt wird.

Das Sperrstück 19 ist nur erforderlich, wenn anderweitig keine Hebelrastung des Betätigungshebels 1 vorhanden ist. Bspw. bei Pkw-Feststellbremsen ist eine solche Rastung schon vorhanden, so daß auf ein zusätzliches Sperrstück 19 verzichtet werden kann.

Wenn ein Sperrstück 19 vorhanden ist, wird dieses nach der Montage entfernt und der Betätigungshebel 1 in Ruhestellung gemäß Figur 3 gebracht. Dabei befindet sich die Außenzahnung 4 des Betätigungshebels 1 außer Eingriff mit der Gegenzahnung 6 der Zahnstange 7. In diesem Zustand ist eine permanente Einund/oder Nachstellung des Betätigungszuges 10 bei einer eventuell vorhandenen Lose gegeben, indem das sich an dem ortsfesten Stützlager 14 abstützende Druckfederelement 16 auf die Zahnstange 7 wirkt und eine Spannung auf den Innenzug 9 ausübt. Hierdurch wird ein eventuell vorhandene Lose aus dem Gesamtsystem herausgenommen.

Wenn nun der Geber 24 bzw. der Betätigungshebel 1 betätigt wird, um auf den Nehmer 25 eine Stellbewegung zu übertragen, gelangt die Außenzahnung 4 in Eingriff mit der Gegenzahnung 6 der Zahnstange 7, wodurch eine Zugbewegung auf den Innenzug 9 des Betätigungszuges 10 ausgeübt und ein entsprechender Betätigungsweg 28 an der Nehmerseite zur Verstellung eines auf der Nehmerseite angeordneten Aggregates bzw. Nehmers 25 vorgenommen wird. Danach kann der Betätigungshebel 1 bspw. wieder in den unbetätigten Betriebszustand gemäß Figuren 1 und 3 übergeführt werden, wobei die Außenzahnung 4 und Gegenzahnung 6 außer Eingriff gelangen und die Druckfeder 16 eventuell vorhandene Lose wieder aus dem Gesamtsystem herausnimmt.

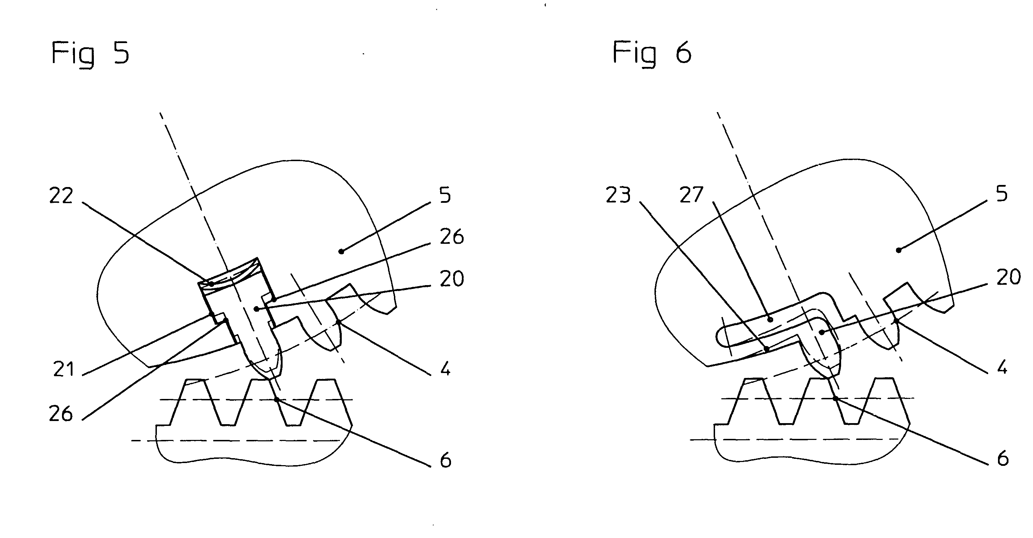

Infolge der stufenlosen Einstellung des beschriebenen Systems kann es vorkommen, daß die korrespondierenden Zähne von Außenzahnung 4 und Gegenzahnung 6 beim anfänglichen Betätigen des Betätigungshebels 1 nicht in Eingriff miteinander gelangen. Um dies zu vermeiden ist es gemäß Figuren 5 und 6 vorgesehen, daß der vom unbetätigten Betriebszustand zum betätigten Betriebszustand zuerst in Eingriff gelangende Zahn 20 der Außenzahnung 4 federnd bzgl. der Gegenzahnung 6 ausgebildet ist.

Dies erfolgt bei der Ausführungsform gemäß Figur 5 dadurch, daß der Zahn 20 in einer Aufnahme 21 des Kreissegmentes 5 aufgenommen ist und mittels eines Federelementes 22, bspw. mittels einer Blattfeder, elastisch in Richtung der Gegenzahnung 6 gedrückt wird. Der maximale Federweg des Zahnes 20 wird durch entsprechende, zusammenwirkende Widerlager 26 am Zahn 20 sowie der Aufnahme 21 begrenzt.

Bei der Ausführungsform gemäß Figur 6 ist der Zahn 20 durch einen Federsteg 23 des Kreissegmentes 5 in Richtung der Gegenzahnung 6 gedrückt. Hierdurch ist sichergestellt, daß der erste Zahn 20 bei einem Nichtkämmen mit der Gegenzahnung 6 nicht verklemmen und elastisch in Richtung der Achse 2 in eine radial innenliegende Ausnehmung 27 des Kreissegmentes 5 ausweichen kann, so daß ein Blockieren des Gebers nicht gegeben ist.

Selbstverständlich kann auf die Ausbildung eines federelastischen Zahnes 20 bei genügend kleiner Verzahnung verzichtet werden. Auch sind auch andere Varianten für eine Synchronisation von Außenzahnung 4 und Gegenzahnung 6 bei der anfänglichen Betätigung des Betätigungshebels 1 denkbar.

### Bezugszeichenliste

- 1 -: Betätigungshebel
- 2 -: Achse
- 3 -: Anschlag
- 4 -: Außenzahnung
- 5 -: Kreissegment
- 6 -: Gegenzahnung
- 7 -: Zahnstange
- 8 -: Führung
- 9 -: Innenzug
- 10 -: Betätigungszug
- 11 -: Außenschlauch
- 12 -: Schlauchfassung, geberseitiges Ende
- 13 -: Schlauchfassung, nehmerseitiges Ende
- 14 -: Stützlager, geberseitig
- 15 -: Stützlager, nehmerseitig
- 16 -: Druckfederelement
- 17 -: Nippel
- 18 -: Freilauf, unverzahnter Abschnitt
- 19 -: Sperrstück, herausnehmbar
- 20 -: Zahn
- 21 -: Aufnahme
- 22 -: Federelement
- 23 -: Federsteg
- 24 -: Geber
- 25 -: Nehmer
- 26 -: Widerlager
- 27 -: Ausnehmung
- 28 -: Pfeil

## Patentansprüche

1. Vorrichtung (10) mit einem Geber (24) und einem Nehmer (25), die mittels eines mechanisch-flexiblen Betätigungszuges (10) gekoppelt sind, wobei der Geber (24) einen um eine Achse (2) schwenkbaren Betätigungshebel (1) mit einem, eine Außenzahnung (4) aufweisenden Kreissegment (5) aufweist, der Außenzahnung (4) des Kreissegmentes (5) eine längsverschiebbar in einer Führung (8) geführten Zahnstange (7) mit einer Gegenzahnung (6) zugeordnet ist, wobei an der Zahnstange (7) das geberseitige Ende eines Innenzuges (9) des Betätigungszuges (10) angelenkt und zur selbsttätigen Längeneinstellung bzw. -nachstellung des Betätigungszuges zwischen einem Stützlager (14) für das geberseitige Ende (12) des Außenschlauches (11) des Betätigungszuges (10) und der Zahnstange (7) ein Druckfederelement (16) angeordnet ist und wobei die Außenzahnung (4) des Betätigungshebels (1) in einer Ruheposition des Betätigungshebels (1) außer Eingriff und in einer Betätigungsposition in Eingriff mit der Gegenzahnung (6) der Zahnstange (7) steht, **dadurch gekennzeichnet, daß** die Achse (2) ortsfest angeordnet ist und das Kreissegment (5) einen unverzahnten Abschnitt (8), insbesondere einen Freilauf aufweist, so daß der Betätigungshebel (1) in der Ruheposition außer Eingriff mit der Gegenzahnung (6) steht.

2. Vorrichtung nach Anspruch 1, **dadurch gekennzeichnet, daß** die Ruheposition durch einen Anschlag (3) definiert ist.

3. Vorrichtung nach einem der vorhergehenden Ansprüche, **dadurch gekennzeichnet, daß** der Betätigungshebel (1) in einem Anlieferungs- bzw. Vormontagezustand der Vorrichtung mittels einer Rastung, eines entfernbare Sperrstücks (19) o. dgl. in einer solchen Betätigungsposition gehalten, in der das Druckfederelement (16) i. w. auf ein Kleinstmaß zusammengedrückt ist.

4. Vorrichtung nach einem der vorhergehenden Ansprüche, **dadurch gekennzeichnet, daß** der erste Zahn (20) der Außenzahnung (4), der bei Betätigung des Betätigungshebels (1) in Eingriff mit der Gegenzahnung (6) der Zahnstange (7) gelangt, federelastisch an dem Kreissegment (5) gelagert ist.

5. Vorrichtung nach Anspruch 4, **dadurch gekennzeichnet, daß** der Zahn (20) in einer am Kreissegment (5) i. w. radial angeordneten Aufnahme (21) geführt und mittels eines Federelements (22) mit einer radial nach außen wirkenden Vorspannung beaufschlagt ist.

6. Vorrichtung nach Anspruch 5, **dadurch gekennzeichnet, daß** der Ausfederweg des Zahnes (20) durch zusammenwirkende Widerlager (26) des Zahnes (20) und der Aufnahme (21) begrenzt ist.

7. Vorrichtung nach Anspruch 4, **dadurch gekennzeichnet, daß** der Zahn (20) einstückig mittels eines Federsteges (23) dem Kreissegment (5) angeformt ist.

8. Vorrichtung nach Anspruch 7, **dadurch gekennzeichnet, daß** der Federsteg (23) i. w. entlang des Umfanges des Kreissegments (5) geführt ist, wobei benachbart des Federsteges (23) eine radial innenliegende Ausnehmung (27) in dem Kreissegment vorgesehen ist.

9. Vorrichtung nach einem der vorhergehenden Ansprüche, **dadurch gekennzeichnet, daß** die Betätigungszüge (10) Bremsseilzüge von Kraftfahrzeugen sind.

## Claims

1. Device (10) with a transmitter (24) and a receiver (25), which are coupled by means of a mechanical flexible actuating pull (10), wherein the transmitter (24) comprises an actuating lever (1), which is pivotable about an axle (2), with a circle segment (5) having an outer toothing (4), a rack (7), which is guided in a guide (8) to be longitudinally displaceable, with a counter toothing (6) being associated with the outer toothing (4) of the circle segment (5), wherein the end, which is at the transmitter side, of an inner pull (9) of the actuating pull (10) is pivotably connected to the rack (7) and a compression spring element (16) for automatic length adjustment or re-adjustment of the actuating pull is arranged between a support bearing (14) for the end (12), which is at the transmitter side, of the outer casing (11) of the actuating pull (10) and the rack (7) and wherein the outer toothing (4) of the actuating lever (1) in a rest position of the actuating lever (1) stands out of engagement with the counter-toothing (6) of the rack (7) and in an actuating position stands in engagement with the counter-toothing (6) of the rack (7), **characterised in that** the axle (2) is arranged to be stationary and the circle segment (5) has an untoothed portion (8), particularly a freewheel, so that the actuating lever (1) in the rest position stands out of engagement with the counter-toothing (6).

2. Device according to claim 1, **characterised in that** the rest position is defined by an abutment (3).

3. Device according to one of the preceding claims, **characterised in that** the actuating lever (1) in a delivery or pre-assembly state of the device is held by means of a detent, a removable blocking member (19) or the like in such an actuating position in which the compression spring element (16) is compressed substantially to a smallest dimension.

4. Device according to one of the preceding claims, **characterised in that** the first tooth (20) of the outer toothing (4), which on actuation of the actuating lever (1) comes into engagement with the counter-toothing (6) of the rack (7), is resiliently mounted at the circle segment (5).

5. Device according to claim 4, **characterised in that** the tooth (20) is guided in a receptacle (21) substantially radially arranged at the circle segment (5) and is loaded by means of a spring element (22) with a radially outwardly acting bias.

6. Device according to claim 5, **characterised in that** the rebound travel of the tooth (20) is limited by a co-operating counter-bearing (26) of the tooth (20) and the receptacle (21).

7. Device according to claim 4, **characterised in that** the tooth (20) is integrally formed at the circle segment (5) by means of a spring web (23).

8. Device according to claim 7, **characterised in that** the spring web (23) is guided substantially along the circumference of the circle segment (5), wherein a radially inwardly disposed recess (27) is provided in the circle segment adjacent to the spring web (23).

9. Device according to one of the preceding claims, **characterised in that** the actuating pulls (10) are brake cable pulls of motor vehicles.

## Revendications

1. Dispositif (10) possédant un transmetteur (24) et un récepteur (25), qui sont couplés au moyen d'un câble d'actionnement mécaniquement flexible (10), le transmetteur (24) présentant un levier de commande (1) pouvant pivoter autour d'un axe (2) et possédant un segment circulaire (5) présentant une denture externe (4), une crémaillère (7) guidée dans une glissière (8) réglable en longueur et comportant une contre-denture (6) étant coordonnée à la denture externe (4) du segment circulaire (5), l'extrémité côté transmetteur d'un câble interne (9) du câble d'actionnement (10) étant articulée au niveau de la crémaillère (7), et un élément à ressort de pression (16) étant disposé pour un réglage ou ajustement automatique en longueur du câble d'actionnement entre une butée d'appui (14) pour l'extrémité côté transmetteur (12) du flexible externe (11) du câble d'actionnement (10) et la crémaillère (7), et la denture externe (4) du levier de commande (1) se trouvant hors de prise de la contre-denture (6) de la crémaillère (7) dans une position de repos du levier de commande (1), et dans une position d'actionnement en prise avec la contre-denture (6) de la crémaillère (7), **caractérisé en ce que** l'axe (2) est disposé de façon fixe et **en ce que** le segment circulaire (5) présente un segment non denté (8), en particulier une roue libre, de sorte que le levier de commande (1) se trouve dans la position de repos hors de prise avec la contre-denture (6).

2. Dispositif selon la revendication 1, **caractérisé en ce que** la position de repos est définie par une butée (3).

3. Dispositif selon l'une des revendications précédentes, **caractérisé en ce que** le levier de commande (1), dans un état de livraison ou de pré-montage du dispositif, est maintenu au moyen d'un élément d'encliquetage, d'un élément de blocage amovible (19) ou équivalent dans une position d'actionnement dans laquelle l'élément à ressort de pression (16) est dans une certaine mesurée comprimé à une cote minimale.

4. Dispositif selon l'une des revendications précédentes, **caractérisé en ce que** la première dent (20) de la denture externe (4), qui parvient lors de l'actionnement du levier de commande (1) en prise avec la contre-denture (6) de la crémaillère (7), est montée de façon élastique au niveau du segment circulaire (5).

5. Dispositif selon la revendication 4, **caractérisé en ce que** la dent (20) est amenée dans un logement (21) disposé radialement au niveau du segment denté (5) et reçoit au moyen d'un élément élastique (22) une pré-tension agissant radialement vers l'extérieur.

6. Dispositif selon la revendication 5, **caractérisé en ce que** la course élastique de la dent (20) est limitée par des butées (26), agissant conjointement, de la dent (20) et du logement (21).

7. Dispositif selon la revendication 4, **caractérisé en ce que** la dent (20) est formée d'une seule pièce au niveau du segment circulaire au moyen d'une barrette à ressort (23).

8. Dispositif selon la revendication 7, **caractérisé en ce que** la barrette à ressort (23) est amenée dans une certaine mesure le long de la périphérie du segment circulaire (5), un évidement interne radial (27) étant prévu à proximité de la barrette à ressort (23) dans le segment circulaire.

9. Dispositif selon l'une des revendications précédentes, **caractérisé en ce que** les câbles d'actionnement (10) sont des tirettes à câble de frein pour véhicules automobiles.
